# EUROPEAN PATENT APPLICATION

(11) **EP 4 793 249 A1**
(43) Date of publication of application: **19.08.2026**
(21) Application number: 25158378.7
(22) Date of filing: 17.02.2025
(51) Int. Cl.: C04B 7/12, C04B 20/04, C04B 28/02

(54) **METHOD AND DEVICE FOR THERMAL ACTIVATION IN MANUFACTURING CEMENT**

(71) Applicant: Heidelberg Materials AG, 69120 Heidelberg (DE)
(72) Inventor: CHEN, Yen-Hau, 69120 Heidelberg (DE); MULLER, Arnaud, 69120 Heidelberg (DE); PATO, Nicolas, 69120 Heidelberg (DE)
(74) Representative: Zellentin & Partner mbB Patentanwälte

(57) **Abstract**

Method for thermal activation in manufacturing cement, wherein particles of a material to be activated for use as supplementary cementitious material in cements and building materials are provided with a first particle size distribution and solid heat transfer particles are provided with a second particle size distribution and either the D₁₀ of the first particle size distribution is at least 1.5 times the D₉₀ of the second particle size distribution or the D₁₀ of the second particle size distribution is at least 1.5 times the D₉₀ of the first particle size distribution, the solid heat transfer particles are mixed with the particles of the material to be activated, the mixed particles are passed into a heating zone and heated by electric heating to provide a thermally activated material, the thermally activated material and the solid heat transfer particles are withdrawn from the heating zone and the thermally activated material is separated from the solid heat transfer particles according to size, and device for thermal activation.

## Description

The present invention relates to a method and device for thermal activation in manufacturing cement, especially for activation of materials to be used as supplementary cementitious materials in cements and building materials, and to a method for manufacturing composite cement using the thermal activation and a use of the thermally activated material for making composite cement.

Cement manufacturing is considered a major source of manmade carbon dioxide emissions. The manufacturing of Portland cement clinker, the hydraulic component in Portland cement, takes place at very high temperatures, typically more than 1400 °C. Additionally, limestone makes up a major part of the raw materials used, and CO₂ is an unavoidable by-product of its calcination. Apart from the impact on the environment, generating the necessary high temperatures is also a cost factor. Thus, proposals to optimize the clinker manufacturing and cement composition for saving natural raw materials, costs and reducing carbon dioxide emissions are countless and also alternative binders have been investigated.

One very successful approach is the use of supplementary cementitious materials (abbreviated SCM) to replace clinker in cement and also for addition at the time of mixing with water to make a building material. Further, SCM can provide at least a part of the aluminum silicate material constituting the main component of alkali activated binders and specifically geopolymers. Unfortunately, the use of SCM has reached a level where the well-established SCM fly ash and ground granulated blast furnace slag are used to more or less the available amounts. Other established SCM are not available everywhere, like volcanic ashes and glasses. Some need a thermal activation to show a suitable reactivity and/or to allow adjusting adequate properties like water demand and mortar spread of building materials using them as SCM.

Thermal activation is a widely used method to restore, improve or create the desired/necessary reactivity of various materials including waste and byproducts used as components in the cement and concrete industries. Once activated, these materials can serve as supplementary cementitious materials, helping to reduce clinker production and, consequently, CO₂ emissions. Typically, thermal activation is applied to materials such as clay, basalt, zeolite, recycled concrete paste, construction and demolition waste (abbreviated C&DW), etc., requiring a mild activation temperature, often in the range from 400 to 1000 °C. Traditionally, this process relies on the combustion of fuels (fossil fuels & alternative fuels) to generate the required heat. However, these conventional technologies are significant sources of CO₂ emissions, which are increasingly at odds with the global push towards carbon neutrality.

For a further reduction of the CO₂ footprint, thermal activation using electric heating emerges as a promising alternative, leveraging renewable energy sources to mitigate CO₂ emissions and drive the industry towards a more sustainable future. Notably, electric heating eliminates the need for CO₂ capture systems, making it a feasible pathway to achieving near-zero CO₂ emissions for thermal activation processes. Moreover, reduced reliance on fuels and the omission of CO₂ capture systems can result in lower operating costs and capital expenditures. Electric resistive elements are commonly used to provide heat through radiation to the target material. However, there are two main challenges that limit applying electric resistive heating technology for thermal activation. First, the lifespan of electric resistive heating elements used for direct heating, where resistive heating elements are placed in the same chamber as the material to be activated, transferring heat through radiation, is short. Interactions between the heating elements and material can inter alia lead to dust clogging, agglomerate formation, and corrosion. Thus, regular replacement of the heating elements is necessary and incurs high costs and effort. Second, heat transfer is poor, limiting scalability. Unlike fuel combustion, which provides heat from a central hot flame generating an atmosphere of hot gas, resistive heating elements require a sufficient heating area to deliver adequate heat input. The efficiency and scalability of an electrified reactor depend on the heating area in contact with the material to be activated. Proper design is essential to optimize thermal efficiency and scalability. Additionally, low thermal conductivity of many materials poses a challenge for static bed reactors, as it limits heat transfer efficiency and uniform material temperature. In-line agitation or mixing is necessary to enhance heat transfer efficiency. As a result, thermal activation using electrically generated heat is a promising approach but for use in manufacturing cement the existing proposals are not optimal. Using resistive heating elements in contact with the material to be activated is causing high effort and costs as well as being problematic when high amounts of SCM are desired. In practice, electric heating for industrial-scale thermal activation in the cement and concrete industry is still rare.

WO 2024/079675 A1 proposes using a fluid (gas or liquid) for indirect heat transfer to thermally activate clay without generating a red color of the calcined clay by iron oxidation. The fluid is typically in "gaseous form" once heated towards the activation temperature and may be at least partially liquefied if cooled to condensation temperature. Unfortunately, the proposal necessitates complex separation technologies. More efficient methods for thermal activation are still needed.

Surprisingly it was now found that using solid heat transfer particles allows an efficient thermal treatment of a material to be activated by electrical heating and poses no problems for separation of the heat transfer particles from the activated material by simple mechanical means like sieving when the heat transfer particles and the material to be activated are provided with particle size distributions separated by a gap. Specifically, when the D₁₀ of the coarser particles is at least 1.5 times, preferably at least 2 times, most preferred at least 4 times the D₉₀ of the finer particles.

The above object is thus achieved with a method for thermal activation in manufacturing cement, wherein particles of a material to be activated for use as supplementary cementitious material in cements and building materials are provided with a first particle size distribution and solid heat transfer particles are provided with a second particle size distribution and either the D₁₀ of the first particle size distribution is at least 1.5 times the D₉₀ of the second particle size distribution or the D₁₀ of the second particle size distribution is at least 1.5 times the D₉₀ of the first particle size distribution, the solid heat transfer particles are mixed with the particles of the material to be activated, the mixed particles are passed into a heating zone and heated by electric heating to provide a thermally activated material, the thermally activated material and the solid heat transfer particles are withdrawn from the heating zone and the thermally activated material is separated from the solid heat transfer particles according to size. The object is also achieved with a device for thermal activation comprising a heating zone having a first supply means for feeding particles of a material to be activated with a first particle size distribution, a second supply means for feeding solid heat transfer particles with a second particle size distribution, a mixing unit for mixing the particles of the material to be activated with the solid heat transfer particles, electric heating means for heating the solid heat transfer particles mixed with the particles of the material to be activated, an outlet for the thermally activated material and the solid heat transfer particles from the heating zone, and a separation unit for separating the thermally activated material and the solid heat transfer particles according to size. Preferably, the device further comprises recirculating means recirculating the heated solid heat transfer particles back to the mixing unit and/or a cooling unit directly exchanging the heat from the thermally activated material to the material to be activated. Still further, the object is achieved with a method for manufacturing composite cement comprising making thermally activated material, providing a cement, and mixing the thermally activated material with the cement. Finally, the object is achieved by using the thermally activated material for manufacturing composite cement.

The electric heating using solid heat transfer particles has several advantages over thermal activation using fuel combustion:
- operation is easy, only temperature and retention time have to be controlled
- no big amount of air/gas drafting is needed, easing the use of a reducing atmosphere
- heat exchange out of cooling the thermally activated material can be used directly for drying and/or pre-heating the material to be activated
- lower capital expenditure due to much simpler device
- lower heat loss and gas flow minimizing power consumption and associated operational expenditure, especially in areas/times with low electricity price.

According to the present invention, electric heating can be used for thermal activation of a variety of materials that are useful as cement components or as addition to hydraulic building materials like concrete. One such material is clay, which is a very promising SCM when properly activated. Other materials such as but not limited to basalt, zeolite, recycled concrete paste, and construction & demolition waste also benefit from the method and device according to the invention. Such materials are useful SCM, too, although achieving a suitable reactivity often requires an activation. Other properties, e.g., the surface area, may also necessitate a treatment to avoid disadvantages on properties of the fresh paste and/or hardened building material. Aluminosilicate materials like clay and zeolite are also useful as component of alkali activated binders including geopolymers. Regarding the activation of clay, it is a specific advantage that the method and device allow a thermal activation without relevant amounts of oxygen being present. Thereby, the reddish coloring developed by clay containing significant amounts of iron compounds or other compounds of trace elements that are colored or show intensified color after oxidation is safely avoided. Thermal activation using fuel combustion requires special reducing conditions right through to parts of the cooling section or a subsequent reducing of the activated clay. Furthermore, temperature can be adjusted easily and precisely with the method and device according to the invention, which is not possible in rotary kilns that are often used for thermal activation using fuel combustion. Using flash calcination allows the same precision of temperature, but it requires huge amounts of suspension gas, thus being energy intensive. Additionally, color control requires additional steps and complex operation.

The material to be activated is provided in the form of particles with a first particle size distribution. Depending on the material to be activated, a suitable particle size distribution can be present in the material as received. More often, the particle size distribution will have to be adjusted. Known process steps and devices are suitable for this. For example, clay, zeolite, basalt, and other natural minerals as well as construction & demolition waste can be crushed, ground, and classified. Too fine materials can be agglomerated, for example but not limited to they can be pelletized, granulated, extruded, compacted, or pressed into regular or irregular lumps. It is also possible that both crushing/grinding/classification and agglomeration are applied. The first particle size distribution has a selected D₁₀ when it constitutes the coarser particles or a selected D₉₀ when it constitutes the finer particles as will be explained later.

The invention relies on solid particles with high thermal conductivity and low specific heat capacity as solid heat transfer particles. In the method and device according to the invention, heat transfer e.g., by radiation from electric resistive heating is augmented by heat conduction through the heat transfer particles. Electric heating elements like resistive heating elements can be and normally are attached to an outer shell of the heating zone, e.g., a heating reactor, according to the present invention. The particles of the material to be activated are evenly mixed with the solid heat transfer particles to form a packed bed in the heating zone. Thus, direct contact of the heating elements with the material to be activated and all the problems associated therewith are avoided. Sufficient heating is accomplished by combining radiation heat with heat transfer by contact between the solid heat transfer particles and the material to be activated.

Suitable materials for the solid heat transfer particles include but are not limited to minerals, ceramics, and metals. The solid heat transfer particles have to withstand the activation temperature without alteration, i.e., they should not melt or soften or react at temperatures of preferably 1000 °C or higher. Further, to ensure the desired heat transfer, they have to absorb heat and transfer it fast and efficiently, i.e., they should have a high thermal conductivity and low specific heat capacity. Typically, the thermal conductivity measured according to standard methods like ASTM C177 should be at least 2 W/m•K, preferably at least 5 W/m•K, most preferred at least 10 W/m•K. The specific heat capacity measured according to standard methods like ASTM E1269 is usually not more than 1.4 kJ/kg•K, preferably not more than 1 kJ/kg•K, most preferred not more than 0.7 kJ/kg•K. Preferred particles are sand, especially pure or predominantly pure quartz sand, which is easy to obtain and cost effective. Furthermore, manufactured and recycled aggregate can be used, like recycled sand, ceramic particles, crushed stone, etc., if applicable sized by crushing, agglomeration and/or sieving as needed. Manufactured aggregate with high thermal performance is another preferred material besides sand. The particles significantly enhance heat transfer to the admixed particles of the material to be activated even in a static bed. The heating area is expanded through the heating of the solid particles. The heating zone, especially where it contacts the bed, is equipped with heating elements on the outer surface. This approach reduces the reactor's scale while providing sufficient heat for thermal activation. It is also possible to use an embedded heater with shell protector to realize indirect heating in-bed. Using sand or ceramic or other mineral particles as solid heat transfer particles has the additional benefit that a possible abrasion of the solid particles does no harm to the cement or building material.

Induction heating is possible with metal solid heat transfer particles either in addition to electric resistive heating elements or as the sole electric heating power. Metal particles mixed with the material to be activated, when subjected to an electromagnetic field, form eddy currents through the resistance of the metal. The heat generated in this way is directly transferred to the material to be activated. This allows for even more effective and efficient heating, leveraging the properties of the metal solid particles to achieve the desired thermal activation.

The necessary temperature in the heating zone depends predominantly on the material to be activated. For example, clay requires different temperatures determined by the clay minerals contained. The various clay minerals have the following optimum calcination temperatures:
- Serpentinite 400 - 500 °C,
- Palygorskite 600 - 800 °C,
- Kaolinite 600 - 800 °C,
- Halloysite 600 - 800 °C,
- Pyrophyllite 750 - 950 °C,
- Montmorillonite 800 - 950 °C,
- Illite 800- 1000 °C,
- Mica 650 - 1000 °C.

Non-converted phases have an especially high water demand and therefore must be avoided as much as possible, so the temperature is adjusted in such a way to convert as much clay as possible without generating high amounts of inert, crystalline phases. Often, temperatures from 400 to 1000 °C, usually from 500 to 900 °C, and mostly from 600 to 800 °C are suitable for activating clay. The suitable temperature in the heating zone for other material like basalt, zeolite, recycled concrete paste, recycled concrete and C&DW is often from 400 to 1000 °C, too.

The needed retention time of the material to be activated and the solid heat transfer particles in the heating zone is influenced by many parameters, especially by the ratio between the material to be activated and the solid heat transfer particles, the total amount of material to be activated in relation to heating power, and the heating power in relation to the desired temperature. Retention times from some seconds to several hours can be needed, typically, times in the range from a few minutes, e.g., 1 or 2 or 5 or 10 minutes, up to an hour, e.g., ½ or ¾ or 1 hour, are suitable.

As a result of thermal activation, the thermally activated material and hot solid heat transfer particles leave the heating zone/reactor at an outlet. To efficiently separate the solid heat transfer particles from the thermally activated material particles after thermal activation, the present invention uses a separation based on the different particle sizes, i.e., the gap between the particle size distributions, of the thermally activated material and the solid heat transfer particles. A preferred separation method is screening, e.g., with a simple mesh screen. The separated solid heat transfer particles are usually still hot and preferably recirculated into the mixing unit. It is further preferred to make the heat contained in the thermally activated material useful. To this end, a cooling unit adapted to transfer the heat to a heat exchange medium is provided. Typically, liquid heat transfer media, e.g., water or oil, are most efficient but any known heat transfer medium, including gases like air or nitrogen, can be used. The heat is preferably transferred to the material to be activated for drying and/or pre-heating. Other uses are also possible, for example, a pre-heating of heat transfer particles when the recirculated particles need replenishment. The activated material can also be simply cooled.

In a first preferred embodiment, the particles of the material to be activated have a first particle size distribution that is coarser than the second particle size distribution of the solid heat transfer particles. Especially with a pelletizing or pressing of the material to be activated, the material is not only standardized to a larger size but also densified and homogenized. Consequently, the thermally activated material can be easily separated from the solid heat transfer particles based on the size difference. Suitable particle sizes for the material to be activated, defined as the D₁₀ of the first particle size distribution, are e.g., a D₁₀ ≥ 4 mm, or ≥ 12 mm, or ≥ 24 mm. The D₉₀ of the first particle size distribution is not critical when this constitutes the coarser particles and will be adapted to allow easy handling of the material during feeding and withdrawal as well as in further steps. From a practical point of view, the D₉₀ of the first particle size distribution can be e.g., ≤ 48 mm, or ≤ 32 mm, or ≤ 16 mm. Naturally, the D₉₀ of any given particle size distribution of the material is bigger than its D₁₀. A suitable second particle size distribution of the solid heat transfer particles adapted to the mentioned particle size distribution of the material to be activated has e.g. a D₉₀ 1 mm when the material to be activated has a D₁₀ ≥ 4 mm, or a D₉₀ ≤ 3 mm when the material has a D₁₀ ≥ 12 mm, or a D₉₀ ≤ 6 mm when the material has a D₁₀ ≥ 24 mm. For the solid heat transfer particles, the D₁₀ is not critical but from a practical point of view the D₁₀ can be e.g., ≥ 50 µm, or ≥ 100 µm, or ≥ 250 µm.

The inverse approach, using coarse solid heat transfer particles and fine material to be activated, can also be applied. For example, it can enhance heat transfer efficiency and facilitate efficient separation if the material to be activated has high thermal conductivity and low ability to be pelletized. Then, using coarser solid heat transfer particles with finer particles from the material to be activated, e.g., ground material, allows a tailored solution to meet specific industrial requirements. The same sizes as mentioned above for the combination of coarse material to be activated and fine solid heat transfer particles are useful, only of course inverted.

Thus, the D₁₀ of the coarser particle size distribution is usually at least a factor 1.5, preferably at least a factor 2.0, most preferred at least a factor 4, higher than the D₉₀ of the finer particle size distribution. Thereby, a sufficient gap between the particle size distributions for separation according to size is achieved. Particle sizes are measured herein by sieving for sizes above 2 mm and determined by laser granulometry for sizes below 1 mm or below 2 mm with a Mastersizer (Malvern Panalytical Ltd., GB) according to the Fraunhofer theory, in isopropanol dispersion. Dₓₓ values are volume based. For ranges extending mainly above 1 mm, sieving is commonly applied, for ranges extending mainly below 1 mm, laser granulometry is typically better. In the range from 1 - 2 mm, the most suitable method for the range of most interest is chosen.

The thermal activation is achieved using indirect electric heating according to the present invention. Useful electric heating systems are electric arc burners, electric hot gas generators, induction heating means, and/or resistive heating means. The electric heating system is designed as a heating zone to provide the energy needed for activation to the material without a direct contact of the heating elements with the material. Electric resistive heating zones and inductive heating zones are preferred as electric heating zone. Electric resistive heating zones, optionally combined with induction heating means, are the most preferred electric heating zones. As stated, electric arc burners and electric hot gas generators are also possible, but they benefit less from the added heat transfer particles. However, above all, they have lower energy efficiency, because the electric power is used to heat a gas which in turn heats the material to be activated.

The electric heating zone can be designed as either a horizontal or vertical unit. In a preferred embodiment, transporting means capable of transporting the bed with particles of the material to be activated and the solid heat transfer particles along electric heating elements are provided. In another embodiment, the zone is a receptacle with an inlet and an outlet for the particles, wherein mixing means can be provided although they are not necessary. Preferably, the electric heating elements are attached to a zone's outer shell on at least one side. They can also be arranged in the zone above, below, and/or on one or both sides of the transporting means. Embedded heaters with shell protector can be used in addition or alternatively to heating elements on the outer shell or on at least one side to provide in-bed indirect heating. The preferred zone has a thermally durable transport system and usually an outer shell for arranging the heating elements and thermal insulation to provide effective indirect heating. The device according to the invention usually comprises:
a) a power supply and control units ensuring that the material to be activated reaches the desired activation temperature swiftly and evenly through conduction from the solid heat transfer particles
b) means for maintaining a sufficient residence time of the material in the heating zone at the activation temperature to achieve optimal activation, e.g., optimal reactivity
c) a separation unit for efficiently separating the thermally activated material from the solid heat transfer particles based on size differences, e.g., utilizing simple mesh systems
d) means for recirculating at least a part of the hot solid heat transfer particles back to the heating zone/reactor, e.g., into a mixing unit, to enhance energy efficiency and process continuity
e) preferably a cooling unit for direct heat exchange from the thermally activated material to the material to be activated to enhance energy efficiency.

A preferred device uses a conveyor belt or grate as transporting means for the particles. Conveyor belts are usual devices in the cement and concrete industry allowing fast loading and unloading, easy adjustment of speed and therewith retention time of the particles on top in a specific zone, and they are available as high-temperature stable construction. Grates can be foreseen instead of belts when all particles are coarse enough.

The thermally activated material is useful for manufacturing composite cement and for use for manufacturing composite cements. In this method and use according to the invention, the thermally activated material is made. A cement is provided and mixed with the thermally activated material. Useful processes for providing the cement and for mixing the cement with the thermally activated material are known per se in the art. Suitable amounts and kind of cement are also the common ones and are determined by the kind of material. In one preferred embodiment, the cement is a hydraulic cement, and the thermally activated material is a supplementary cementitious material and/or filler.

Cement designates a material that, after mixing with an aqueous liquid to form a paste, is able to develop mechanical strength by hydraulic reaction. Thus, cement mostly denotes a clinker ground with or without further components, but also mixtures like super-sulfated cement, geopolymer binder, and hydraulic materials not obtained by sintering like a dicalcium silicate obtained by hydrothermal treatment. Composite cement means a mixture containing cement and a supplementary cementitious material. A cement or composite cement is usually used adding water and mostly also aggregate to form a paste. Typically, admixtures and/or additives are added to the (composite) cement and/or the paste. Preferred cements are Portland cement, Portland composite cement, calcium aluminate cement, calcium sulfoaluminate cement, and dicalcium silicate cement.

A supplementary cementitious material (abbreviated SCM) is defined as a pozzolanic and/or latent hydraulic material useful to replace a part of the clinker in a binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like a sulfate or a calcium oxide or hydroxide and/or products of the hydraulic reaction of the cement, e.g., calcium silicates liberate calcium hydroxide during hardening. Pozzolanic materials are characterized by a content of reactive silica and/or alumina which form strength providing calcium silicate hydrates and calcium aluminate hydrates, respectively, during hydration of the clinker together with the calcium hydroxides liberated. In practice, the limit between latent hydraulic and pozzolanic materials is not well defined, for example, fly ashes can be both latent hydraulic and pozzolanic, depending on their calcium oxide content. Consequently, the term SCM designates both latent hydraulic as well as pozzolanic materials. Not reactive or only slightly reactive materials like limestone that substantially do not take part in the hydraulic reactivity have to be clearly differentiated from SCM, with which they are sometimes summarized as mineral additions. Preferred supplementary cementitious materials are, for example, but not limited to calcined clay, recycled concrete fines, burnt oil shale, ground granulated blast furnace slag and other latent-hydraulic or pozzolanic slags, fly ashes both calcium rich and calcium lean ones, natural pozzolans like volcanic ash and ground volcanic glass, artificial pozzolans, and mixtures thereof. Preferably, the SCM is the or one of the thermally activated materials.

The composite cement typically comprises from 10 to 65 wt.-% cement and from 90 to 35 wt.-% thermally activated material, preferably from 20 to 60 wt.-% cement and from 80 to 40 wt.-% thermally activated material, most preferred from 40 to 50 wt.-% cement and from 60 to 50 wt.-% thermally activated material, all with respect to the total composite cement weight. Naturally, the amounts of all components in a specific composite cement add up to 100 %, so if thermally activated material and cement are the sole components their amounts add up to 100 %, when there are other components, the combined amount of thermally activated material and cement is less than 100 %. Such other components can be one or more SCM that do not need a thermal activation, and/or fillers.

The composite cement can comprise other generally known ingredients like additives and/or admixtures. Often used admixtures are water reducing agents and plasticizers like for example, but not exclusively, organic compounds with one or more functional group selected from carboxylate, sulfonate, phosphonate, phosphate, or alcohol. These serve to achieve a good consistency, i.e., flowability, of the paste with a smaller amount of water. Since a decrease of water/binder ratio normally provides an increase of strength, such admixtures are commonly used. Air entraining agents are also able to improve flowability and can be used for this aim or for other reasons such as, but not limited to, density modifications, compactibility improvements, air entrainment to resist freeze thaw cycles, etc. Useful air entraining agents are e.g., surface-active substances, especially ones based on soaps from natural resins or synthetic nonionic and ionic surfactants. Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulfonates, hydroxycarboxylic acids and their salts, phosphonates, sugars (saccharides). It is also possible to add admixtures that are designed to modify the rheology properties, i.e., rheology modifiers like polycarboxylates, lignosulfonates, starch, Karoo gum, bentonite clay, polyvinyl alcohol, and mixtures thereof. It is also possible to add admixtures that are designed to accelerate the evolution of the setting and/or of the compressive strength development. These can be, but are not limited to, alkaline sulfates, alkaline chlorides, or alkaline nitrates. In particular, an application of these accelerators combined with amines is beneficial. Suitable amines are for example, but not limited to, monoethanolamine, diglycolamine, diethanolamine, diisopropanolamine, methyldiethanolamine, triethanolamine, triisopropanolamine, and diethanol-isopropanolamine. Especially preferred are triethanolamine, triisopropanolamine, and diethanol-isopropanolamine. Application of other accelerators that are known in concrete technology is possible as well. All admixtures are used in the amounts known as such, wherein the amount is adapted to a specific binder and special needs in the known manner. Additives are for example fillers, pigments, polymers, and fibers. Fillers are usually ground minerals, i.e., stone dusts, especially limestone, dolomite, and mixtures thereof, preferably limestone. Artificial materials are also possible. Additives are also used in the amounts known as such, wherein the amount is adapted to a specific binder and special needs in the known manner.

The method and device according to the invention provide the following benefits:
- Indirect Heating Protection: Electric heating systems like electric resistive heating elements can operate with indirect heating, avoiding contact of the electric heating elements with the material to be activated and thereby extending their lifespan.
- Efficient Heat Transfer: The heating elements can be mounted on an outer shell of the zone and/or be embedded in the bed with a shell protector, efficiently transferring radiant heat to the particle bed. This indirect heating method allows the elements to be positioned close to the particle bed, enhancing radiation efficiency. Subsequent heat transfer occurs via conduction through the shell to the solid heat transfer particles, maximizing the heating area along the bed.
- Enhanced Heat Conduction: The system facilitates heat transfer through the solid heat transfer particles, which have high thermal conductivity and low specific heat capacity. Densified particles, e.g., pellets, of the material to be activated are fully enveloped and heated by the solid heat transfer particles, eliminating the need for agitation to achieve uniform heat distribution. This method is superior to conventional direct electric heating, where only the surface of the material bed receives radiant heat.
- Operational Efficiency: The heating zone can operate at ambient pressure with no or substantially no gas or air flow, significantly lowering the operational expenses (Opex) associated with air/gas drafting. The simple design of a bed-transporting zone with attached heating elements also promises low capital expenditure (Capex).
- Pre-treatment Benefits: Pre-treatment of the material to be activated preferably involves aggregation instead of grinding, which is advantageous for materials with high moisture content and stickiness. Pre-treatment units for agglomeration, e.g., by pelletization or compaction, are expected to have lower Capex and Opex compared to grinding units.
- Simplified Operation Control: The heating zone is straightforward with simple control parameters. The primary focus is on maintaining the temperature of the heating elements and the speed of bed transport to achieve thermal activation.
- Recirculation for Efficiency: The solid heat transfer particles are recirculated from the zone outlet to directly interact with and heat fresh material to be activated, enhancing thermal efficiency.
- Adiabatic Environment: The heating system can be designed to approach an adiabatic environment with proper insulation around the zone, significantly reducing heat loss.
- Retention of the Oxidation State of Trace Elements: The pressurized environment created by agglomeration and the solid bed helps retain trace elements in their original oxidation state in the activated material.
- Versatile System: The system can be combined with air/oxygen-rich gas fluidizing to create a bubbling fluidized bed if an oxygen-rich atmosphere is needed to combust organic content or support carbon-neutral fuel. Alternatively, a very small flow of oxygen free gas or gas reduced in oxygen or substantially free of oxygen is sufficient for a reducing atmosphere.

The invention will be illustrated further with reference to the figures that follow, without restricting the scope to the specific embodiments described. The invention includes all combinations of described and especially of preferred features that do not exclude each other. If not otherwise specified any amount in % or parts is by weight and in the case of doubt referring to the total weight of the composition/mixture concerned. A characterization as "approximately", "around", "about", and similar expressions in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition and is only present in trace amounts or as an impurity. As used herein, unless indicated otherwise, the term "free from" means that a composition does not comprise a particular material, i.e., the composition comprises 0 weight percent of such material.

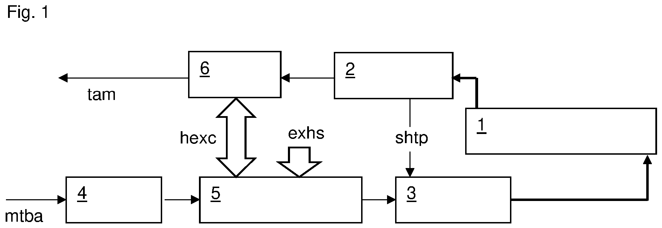

A preferred embodiment of the method according to the invention is illustrated in figure 1. It relies on a pelletization/compaction of the material to be activated combined with electric resistive heating. The solid heat transfer particles shtp are heated to the target activation temperature by circulating them through three units: the electric resistive heating zone 1, the separation unit 2, and the mixing unit 3. The material to be activated mtba is pelletized or compacted uniformly to a specific dimension, e.g., > 4 mm, in an agglomeration unit 4. Then, it is dried and pre-heated in a drying unit 5 using exchanged heat hexc from a cooling unit 6 or an external heating source hexs (e.g., kiln gas). The dried material mtba is homogeneously mixed with recirculated solid heat transfer particles shtp in the mixing unit 3. This step involves significant pre-heating, where heat transfers from the hot solid particles shtp to the material to be activated mtba without any electric heating. The mixed solid particles and material are fed from the mixing unit 3 into an electric resistive heating zone 1, forming a packed bed pb inside the zone 1. By setting the selected temperature of the heating elements and ensuring sufficient residence time, the material mtba reaches the activation temperature quickly and evenly through solid particle conduction, maintaining a constant activation temperature for the desired period. The thermally activated material tam is separated from the solid particles shtp based on size differences using e.g., a mesh in the separation unit 2. The separated solid particles shtp are recirculated back to the mixing unit 3. Finally, the thermally activated material tam is cooled in a cooling unit 6, where the exchanged heat hexc can be directly utilized in the drying unit 5.

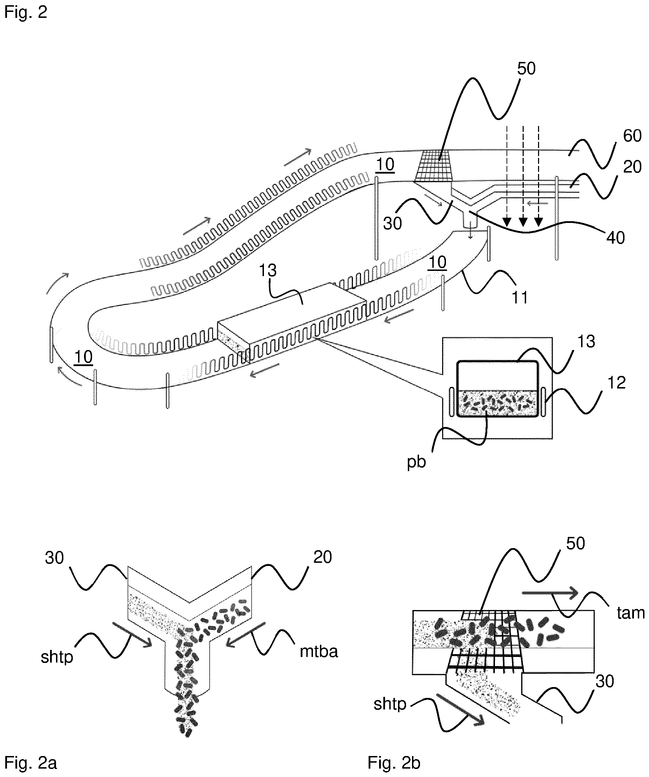

A preferred embodiment of the heating zone is illustrated in figure 2 with enlarged details shown in figure 2 and figures 2a and 2b. Therein, a heating zone or reactor 10 is equipped with a transporting means 11 and equipped with electric resistance heating elements 12 attached to a reactor shell 13 (partly shown). Material to be activated mtba, e.g., pelletized raw clay with a D₁₀ ≥ 4 mm, is fed via inlet 20, and, e.g., quartz sand with a D₉₀ ≤ 1 mm as solid heat transfer particles shtp is circulated and if necessary complemented via inlet 30 into a hopper (see figure 2a) forming a mixing unit 40. A packed bed pb (see enlarged cross section in figure 2) comprising the mixture of material to be activated mtba with the solid heat transfer particles shtp moves with the transporting means 11 in the direction indicated by the arrows. Radiation heat indicated by the sinuous lines heats the material to be activated mtba and the solid heat transfer particles shtp directly. The material to be activated mtba is additionally heated by heat transfer from the solid particles shtp. The speed of the transporting means 11 is adjusted so that the material to be activated mtba is exposed to heat as long as needed to change it into a thermally activated material tam. A separation unit 50 is formed by a mesh (see figure 2b) sized to let the sand shtp fall through for recirculation and keeping the thermally activated material tam on top. The thermally activated material tam is withdrawn from the device via outlet 60. Preferably, gas, especially air, is blown through the thermally activated material into the material to be activated for drying, as indicated with the broken line arrows. The whole device can have a shell for insulation and/or to keep oxygen out of the device during thermal activation.

### List of reference numbers

- 1: heating zone/heating reactor
- 2: separation unit
- 3: mixing unit
- 4: agglomeration unit, e.g., pelletizing unit
- 5: drying and pre-heating unit
- 6: cooling unit

- shtp: solid heat transfer particles, e.g., sand
- mtba: material to be activated, e.g., clay
- hexc: exchanged heat
- hexs: heat from external source
- tam: thermally activated material
- pb: packed bed, mixture of shtp and mtba

- 10: heating zone/heating reactor
- 11: transporting means
- 12: resistive heating element
- 13: shell
- 20: inlet
- 30: inlet
- 40: mixing unit/hopper
- 50: separation unit/mesh
- 60: outlet

## Claims

1. Method for thermal activation in manufacturing cement, wherein particles of a material to be activated for use as supplementary cementitious material in cements and building materials are provided with a first particle size distribution and solid heat transfer particles are provided with a second particle size distribution and either the D₁₀ of the first particle size distribution is at least 1.5 times of the D₉₀ of the second particle size distribution or the D₁₀ of the second particle size distribution is at least 1.5 times the D₉₀ of the first particle size distribution, the solid heat transfer particles are mixed with the particles of the material to be activated, the mixed particles are passed into a heating zone and heated by electric heating to provide a thermally activated material, the thermally activated material and the solid heat transfer particles are withdrawn from the heating zone and the thermally activated material is separated from the solid heat transfer particles according to size.

2. Method according to claim 1, wherein either the D₁₀ of the first particle size distribution is at least 2.0 times, preferably at least 4 times, the D₉₀ of the second particle size distribution or the D₁₀ of the second particle size distribution is at least 2.0 times, preferably at least 4 times, the D₉₀ of the first particle size distribution.

3. Method according to claim 1 or 2, wherein the first particle size and/or the second particle size is adjusted by crushing, sieving and/or classification; and/or the first particle size is adjusted by agglomeration, especially by pelletization, granulation, extrusion, pressing and/or compaction.

4. Method according to any one of claims 1 to 3, wherein the material to be activated is clay, zeolite, basalt, recycled concrete fines, recycled concrete, or construction & demolition waste, preferably clay or zeolite, most preferred clay.

5. Method according to any one of claims 1 to 4, wherein the solid heat transfer particles have a thermal conductivity of at least 2 W/m•K, preferably at least 5 W/m•K, most preferred at least 10 W/m•K, and/or a specific heat capacity of not more than 1.4 kJ/kg•K, preferably not more than 1 kJ/kg•K, most preferred not more than 0.7 kJ/kg•K.

6. Method according to any one of claims 1 to 5, wherein the solid heat transfer particles are from minerals, ceramics, or metals, preferably from minerals or ceramics, most preferred are sand, especially quartz sand.

7. Method according to any one of claims 1 to 6, wherein the solid heat transfer particles separated from the thermally activated material are recirculated to be mixed with the particles of the material to be activated.

8. Method according to any one of claims 1 to 7, wherein the thermally activated material separated from the solid heat transfer particles is cooled by heat exchange, preferably using the heat for drying and/or pre-heating the material to be activated.

9. Method according to any one of claims 1 to 8, wherein the temperature in the heating zone is adjusted to range from 400 to 1000 °C, preferably from 500 to 900 °C, most preferred from 600 to 800 °C; and/or the residence time in the heating zone is adjusted to range from 1 or 2 or 5 or 10 minutes up to ½ or ¾ or 1 hour.

10. Device for thermal activation comprising a heating zone having a first supply means for feeding particles of a material to be activated with a first particle size distribution, a second supply means for feeding solid heat transfer particles with a second particle size distribution, a mixing unit for mixing the particles of the material to be activated with the solid heat transfer particles, electric heating means for heating the solid heat transfer particles mixed with the particles of the material to be activated, an outlet for the thermally activated material and the solid heat transfer particles from the heating zone, and a separation unit for separating the thermally activated material and the solid heat transfer particles according to size.

11. Device according to claim 10, additionally comprising
- means for recirculating the solid heat transfer particles to the mixing unit after separation from the thermally activated material, and/or
- a cooling unit for cooling the thermally activated material after separation from the solid heat transfer particles, the cooling unit preferably comprising heat exchanger adapted to transfer heat to the material to be activated for drying and/or pre-heating, and/or
- transporting means for passing the solid heat transfer particles mixed with the particles of the material to be activated through the heating zone.

12. Device according to claim 10 or 11, wherein the heating zone is equipped with a heating system comprising one or more of an electric arc burner, an electric hot gas generator, electric inductive heating means and electric resistive heating means, preferably the heating system comprises electric resistive heating means.

13. Device according to any one of claims 10 to 12, wherein the separation unit is a screen or sieve, preferably a mesh screen.

14. Method for manufacturing a composite cement comprising:
- manufacturing a thermally activated material by the method according to any one of claims 1 to 9,
- providing a cement, and
- mixing the cement with the thermally activated material.

15. Use of a thermally activated material made by the method according to any one of claims 1 to 9 for manufacturing composite cement, wherein a cement is provided and mixed with the thermally activated material.
